# EUROPÄISCHE PATENTSCHRIFT

(11) **EP 1 795 776 B1**
(45) Veröffentlichungstag und Bekanntmachung des Hinweises auf die Patenterteilung: **11.02.2009**
(21) Anmeldenummer: 07006763.2
(22) Anmeldetag: 09.03.2006
(51) Int. Cl.: F16F 9/512

(54) **Schwingungsdämpfer mit amplitudenselektiver Dämpfkraft**
Shock absorber with a damping force depending on the amplitude
Amortisseur de vibrations avec une force d'amortissement dépendant de l'amplitude

(30) Priorität: 30.04.2005 DE 102005020293
(43) Veröffentlichungstag der Anmeldung: 13.06.2007
(62) Teilanmeldung aus: 06004804.8
(73) Patentinhaber: ZF Friedrichshafen AG, 88046 Friedrichshafen (DE)
(72) Erfinder: Hammer, Thomas, 97653 Bischofsheim (DE); Doppernas, Michael-Johann, 96170 Priesendorf (DE); Planitzer, Matthias, 97520 Röthlein (DE); Denner, Manfred, 97711 Maßbach (DE)

(56) Entgegenhaltungen:
- EP-A- 1 437 525
- EP-A- 1 496 285
- DE-A1- 4 427 273
- DE-A1- 19 948 328
- DE-B- 1 264 165
- DE-C1- 10 041 199
- US-A1- 2005 056 506

## Beschreibung

Die Erfindung betrifft einen Schwingungsdämpfer mit amplitudenselektiver Dämpfkraft gemäß dem Oberbegriff von Patentanspruch 1.

Aus der DE 197 49 356 B4 ist ein Schwingungsdämpfer mit amplitudenselektiver Dämpfkraft bekannt, der eine Kolbenanordnung aufweist, die ein unteres und ein oberes Ventil umfasst, die von einem Abstandsstück auf Abstand gehalten werden. Beide Ventile sind jeweils beidseitig mit Dämpfventilscheiben und mindestens einer Rückschlagventilscheibe bestückt. Zwischen den beiden Ventilen ist ein Schaltring axial verschiebbar angeordnet, der in Abhängigkeit der Bewegungsrichtung der Kolbenstange auf den einander zugewandten Ventilscheiben der beiden Ventile zur Anlage kommt und dabei einen Ringspalt zwischen den Ventilscheiben und der Innenwandung des Zylinders freigibt oder blockiert.

Die DE 199 48 328 A1 beschreibt ebenfalls einen Schwingungsdämpfer mit amplitudenselektiver Dämpfkraft, dessen Kolbenanordnung einen axial beweglichen Schaltring aufweist, der eine Strömungsverbindung durch einen hohlen Kolbenstangenzapfen steuert. Eine Auslassöffnung der Strömungsverbindung ist einer Anschlagfläche für den Schaltring vorgelagert. Dadurch können Geräuschprobleme eingeschränkt werden. Es muss jedoch hingenommen werden, dass die amplitudenselektive Dämpfkraftänderung nur in Ausfahrrichtung der Kolbenstange möglich ist und ein gewisser Totweg, nämlich der Abstand der Auslassöffnung bis zur Anschlagfläche überwunden werden muss, bis eine amplitudenselektive Dämpfkraftänderung in Ausfahrrichtung wirksam wird.

Aufgabe der vorliegenden Erfindung ist es eine alternative Lösung zur Geräuschminimierung bei einem Schwingungsdämpfer mit amplitudenselektiver Dämpfkraft aufzuzeigen.

Erfindungsgemäß wird die Aufgabe dadurch erreicht, dass hydraulisch parallel zur Strömungsverbindung ein Bypasskanal vorliegt, der mindestens eine Verbindungsöffnung zur Strömungsverbindung aufweist, wobei die Verbindungsöffnung einer der Anschlagflächen vorgelagert ist.

Der Bypasskanal dient dazu, das Dämpfmedium in Richtung der dem komprimierten Arbeitsraum abgewandten Seite des Schaltrings zu zuführen und durch eine stufenlos Schließbewegung der Verbindungsöffnung eine gedämpfte Anschlagbewegung des Schaltrings zu erreichen.

In weiterer Ausgestaltung wird der Bypasskanal von einem hülsenförmigen Grundkörper und einer dazu konzentrisch angeordneten Distanzhülse gebildet wird.

Zur möglichst optimalen Führung des Schaltrings gleitet dieser auf der Distanzhülse, wobei die Distanzhülse auf ihrer Außenseite mit einem Längsprofil zur Hinterströmung des Schaltrings ausgeführt ist.

Zur Bemessung der Dämpfmediumströme innerhalb der Kolbenanordnung weist diese einen Verteilerring mit einen Anschluss an die Strömungsverbindung und den Bypasskanal auf.

Gemäß einem vorteilhaften Unteranspruch weist der Verteilerring mindestens einen Anschluss für eine Strömungsrichtung des Dämpfmediums bei einer Kolbenstangenausfahrbewegung und mindestens einen Anschluss für eine Strömungsrichtung bei einer Kolbenstangeneinfahrbewegung auf. Der Vorteil besteht darin, dass verzögerungsfrei ausgehend von der Schaltringabhubbewegung von einer Anschlagfläche eine reduzierte Dämpfkraft vorliegt und trotzdem keine Anschlaggeräusche auftreten.

Dabei ist die Distanzhülse in Umfangsrichtung orientiert zum Verteilerring montiert, um die Trennung der Anschlüsse für die jeweilige Strömungsrichtung zu vereinfachen.

Zur Einstellung der Dämpfwirkung im Bereich der amplitudenselektiven Dämpfkraftsteuerung sind die Anschlüsse im Verteilerring in ihrem wirksamen Querschnitt einstellbar.

Eine ganz besonders einfache Einstellbarkeit der Dämpfwirkung wird dadurch erreicht, dass die Distanzhülse zum Verteilerring verdrehbar ausgeführt ist.

Des weiteren trennt eine Rückschlagventilanordnung den Bypasskanal und die Strömungsverbindung bei den verschiedenen Strömungsrichtungen in Abhängigkeit der Kolbenstangenbewegungen. Hydraulische Kurzschlüsse, die den Schaltpunkt des Schaltrings verändernt könnten, werden vermieden.

So ist vorgesehen, dass die Rückschlagventilanordnung aus zwei Rückschlagventilen besteht, die ein gegensinnig Schließverhalten aufweisen.

Besonders einfach und kostengünstig lässt sich die Rückschlagventilanordnung in Verbindung mit mindestens einem Rückschlagventilring umsetzen.

Platzsparend ist die Rückschlagventilanordnung innerhalb des Verteilerrings ausgeführt.

Anhand der folgenden Figurenbeschreibung soll die Erfindung näher erläutert werden.

Es zeigt:
- Fig. 1: Kolbenanordnung mit einem Umlenkprofil
- Fig. 2: Kolbenanordnung mit einer konusförmigen Mantelflläche als Drosselstelle
- Fig. 3: Kolbenanordnung mit einem Bypasskanal
- Fig. 4 u. 5: Kolbenanordnung mit einem Bypasskanal und einer Rückschlagventilanordnung
- Fig. 6 u. 7: Distanzhülse der Figuren 4 und 5 als Einzelteil
- Fig. 8: Kolbenanordnung mit mindestens einer Nut zur Hinterströmung eines Schaltrings

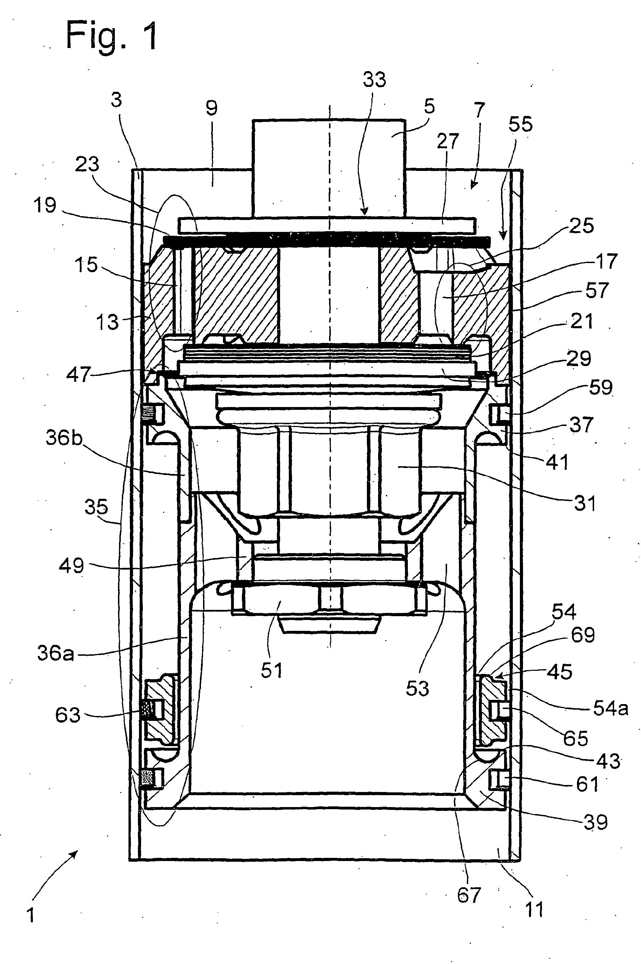

Die Figur 1 zeigt einen Ausschnitt aus einem Schwingungsdämpfer 1 beliebiger Bauart. In einem Zylinder 3 ist eine Kolbenstange 5 zusammen mit einer Kolbenanordnung 7 axial beweglich geführt. Die Kolbenanordnung unterteilt den dämpfmittelgefüllten Zylinder 3 in einen kolbenstangenseitigen Arbeitsraum 9 und einen kolbenstangenfernen Arbeitsraum 11. Ein Hauptbestandteil der Kolbenanordnung ist ein Kolbenkörper 13, der Verbindungskanäle 15; 17 mit Ventilscheiben 19, 21 für beide Durchströmungsrichtungen aufweist. Die Verbindungskanäle 15 und die Ventilscheiben 19 bilden ein Druckstufenventil 23, das eine Dämpfkraft in Einfahrrichtung der Kolbenstange erzeugt. Ein Zugstufenventil 25, das in Ausfahrrichtung der Kolbenstange wirkt, besteht aus den Verbindungskanälen 17 und den Ventilscheiben 21. Die Ventilscheiben sind auf den Kolbenkörper vorgespannt und geben jeweils die Austrittsöffnungen der Verbindungskanäle frei, wenn in den Verbindungskanälen ein bestimmter auf die Ventilscheiben wirksamer Öffnungsdruck aufgebaut ist. Den Ventilscheiben 19; 21 schließen sich noch Stützscheiben 27; 29 an. Das Paket zwischen den Stützscheiben wird von einer Kolbenmutter 31 auf einen Absatz 33 der Kolbenstange 5 vorgespannt.

Die Kolbenanordnung 7 umfasst eine Baugruppe 35, die vom Kolbenkörper und den Ventilscheiben unabhängig ausgeführt ist. Die Baugruppe 35 verfügt über einen hülsenförmigen Grundkörper 36a; 36b, der Ringstege 37; 39 aufweist, an denen einander zugewandt Anschlagflächen 41; 43 für einen axial beweglichen Schaltring 45 ausgeführt sind. Axial stützt sich die Baugruppe 35 im kolbenstangenfernen Arbeitsraum 11 am Kolbenkörper 13 ab, der auch eine Zentrierung 47 für die Baugruppe aufweist. Die gesamte Baugruppe 35 wird über eine Haltescheibe 49 an der Kolbenstange 5 fixiert. Eine von der Kolbenmutter 31, die die Verspannungskette der Kolbenanordnung zwischen den beiden Stützscheiben 27; 29 fixiert, unabhängige Zentriermutter 51 spannt die Baugruppe über die Haltescheibe 49 auf den Kolbenkörper 13 vor, wobei die Haltescheibe mit mindestens einer Dämpfmitteldurchlassöffnung 53 versehen ist, um einen ungehinderten Zu- und Abstrom für die Dämpfventile 23; 25 gewährleisten zu können.

Der Schaltring 45 weist radial zur Innenwandung des Zylinders 3 und nach radial innen bezogen auf den hülsenförmigen Grundkörper jeweils einen Ringspalt 54; 54a auf. Der Ringspalt 54 steuert eine Strömungsverbindung 55 zwischen den beiden Arbeitsräumen 9; 11. Der Strömungsverbindung 55 setzt sich in den Bereich der Mantelfläche des Kolbenkörpers fort. Dazu verfügt der Kolbenkörper über mindestens eine Axialnut 57, z. B. in der Form einer Abflachung. In den Ringstegen sind Voröffnungsquerschnitte 59; 61 in Form von Drosselringen ausgeführt. Die Voröffnungsquerschnitte können unterschiedlich groß ausgeführt sein. Wenn sich der Schaltring 45 zwischen den Anschlagflächen 41; 43 der Ringstege 37; 39 befindet, sind die Voröffnungsquerschnitte 59; 61 wirksam.

Im Schaltring 45 verfügt die Baugruppe als Teil der Kolbenanordnung über einen Drosselring 63 der einen Voröffnungsquerschnitt 65 bestimmt. Der Drosselring 63 ist nach radial außen vorgespannt und bestimmt durch den Reibkontakt mit der Innenwandung des Zylinders 3 die axiale Position des Schaltrings 45. Der Schaltring steuert den zusätzlichen Voröffnungsquerschnitt 59; 61 zum Voröffnungsquerschnitt 65 des Drosselrings. Der Voröffnungsquerschnitt 65, der vom Drosselring 63 im Schaltring 45 bestimmt wird, ist kleiner als der Voröffnungsquerschnitt 59; 61 in den Ringstegen 39; 41, der bei Anlage des Schaltrings wirksam wird. Der Ringspalt 54 zwischen der hülsenförmigen Baugruppe 36a; 36b weist einen vielfachen Querschnitt auf, wie die Voröffnungsquerschnitte 59; 61, so dass der Voröffnungsquerschnitt 65 im Schaltring 45 bei abgehobener Schaltstellung von einer der beiden Anschlagflächen 41; 43 funktionslos ist.

Bei einer Kolbenstangenbewegung, z. B. in Ausfahrrichtung, dabei wird der Arbeitsraum 9 komprimiert, fließt Dämpfmedium über die Axialnut 57 in Richtung des Drosselrings im Ringsteg 37. Der Voröffnungssteg drosselt zwar das in die Strömungsverbindung 55 zwischen den beiden Arbeitsräumen 9; 11 einströmende Dämpfmedium, doch wirkt eine Druckkraft auf die Oberseite des Schaltrings. Das Dämpfmedium kann zwischen dem relativ groß bemessenem Ringspalt 54 in Richtung des unteren Ringstegs 39 mit der Anschlagfläche 43 strömen. Dabei trifft das Dämpfmedium im Endbereich des Schaltringwegs auf eine profilierte Umlenkfläche 67, die ein Dämpfmediumpolster in Richtung des Schaltrings 45 aufbaut und diesen damit abbremst. Die Umlenkfläche wird von einer Rinne gebildet und ist radial innen zur Anschlagfläche 43 ausgeführt.

Der Schaltring 45 verfügt beidseitig über ein Drosselprofil 69, das vor Erreichen der Anschlagflächen 41; 43 in die profilierte Umlenkfläche 67 bzw. Rinne eintaucht und einen Drosselkanal bildet, der das Abfließen des Druckpolsters durch den Voröffnungsquerschnitt 61 drosselt.

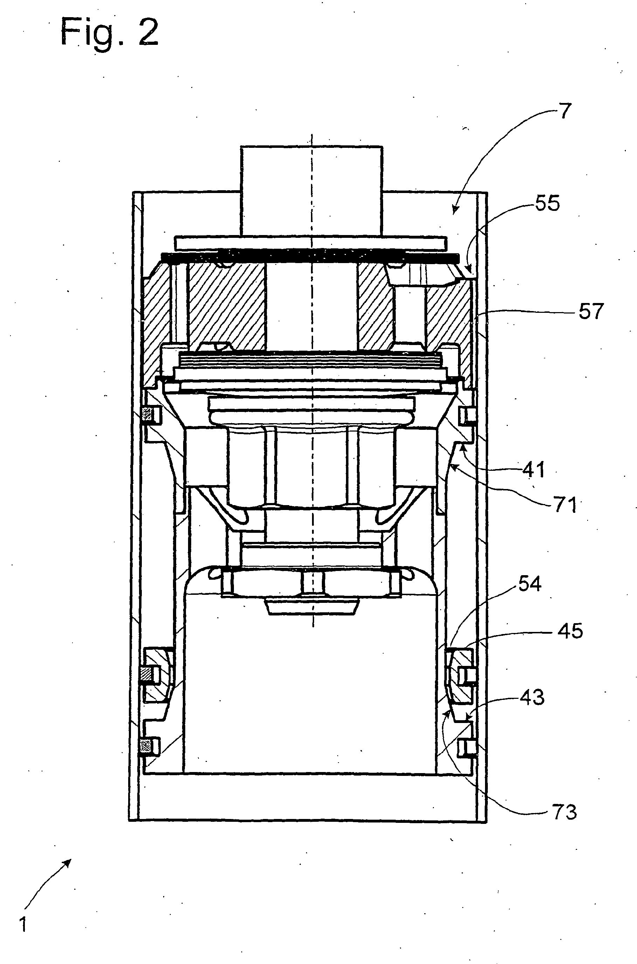

Die Variante der Kolbenanordnung 7 nach Fig. 2 entspricht im wesentlichen der nach Fig. 1. Der funktionale und konstruktive Unterschied besteht darin, dass in der Strömungsverbindung 55 der Anschlagfläche 41; 43 vorgelagert eine Mantelfläche ausgeformt ist, die mit dem Schaltring 45 eine Drosselstelle bildet. Die Mantelfläche ist als eine Konusfläche 71; 73 ausgeführt, so dass sich der Ringspalt 54 zwischen dem Schaltring 45 und der Konusfläche 71; 73 mit zunehmender Annäherung des Schaltrings an die Anschlagfläche 41; 43 kontinuierlich verkleinert und damit eine entsprechend sich steigernde Drosselfunktion erreicht wird, die ein Anschlaggeräusch des Schaltrings auf eine Anschlagfläche 41; 43 verhindert.

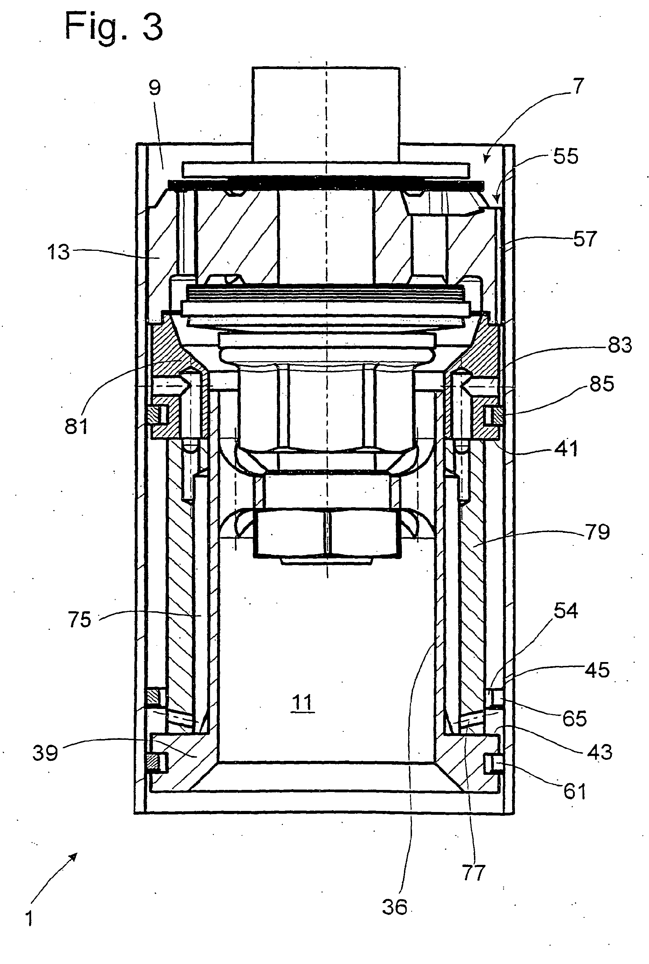

Die Fig. 3 beschreibt eine Lösung, bei der in der Kolbenanordnung 7 hydraulisch parallel zur Strömungsverbindung 55 ein Bypasskanal 75 vorliegt, der mindestens eine Verbindungsöffnung 77 aufweist, die der Anschlagfläche 43 vorgelagert ist. Der Bypasskanal wird von dem hülsenförmigen Grundkörper 36 und einer dazu radial außerhalb konzentrisch angeordneten Distanzhülse 79 gebildet. Die Kolbenanordnung weist zwischen dem Kolbenkörper 13 und dem hülsenförmigen Grundkörper 36 einen Verteilerring 81 mit einem Anschluss 83 an die Strömungsverbindung 55 und den Bypasskanal 75 auf.

Bei einer Kolbenstangenbewegung in Richtung des Arbeitsraums 9 wird Dämpfmedium in die Strömungsverbindung 55 verdrängt. Am Ende des Axialkanals 57 steht das Dämpfmedium an einem Kolbenring 85 an, der hydraulisch dicht oder mit einer definierten Drosselwirkung in Richtung des Schaltrings 45 ausgeführt sein kann. Wichtig ist, das zwischen dem Axialkanal 57 und dem Ringraum zwischen den beiden Anschlagflächen 41; 43 ein Druckgefälle vorliegt. Je nach Abstimmung des Kolbenrings 85 strömt mehr oder weniger Dämpfmedium in den Bypasskanal 75 und sorgt über die Verbindungsöffnung 77 für einen Druckausgleich an der Unterseite des Schaltrings 45 und der Anschlagfläche 43. Bei einem hermetisch dichten Kolbenring 85 sorgt der Ringspalt 54 dafür, dass das Dämpfmedium auch den Raum zwischen der Schaltringoberseite und der Anschlagfläche 41 erreicht. Die Verbindungsöffnung wird von dem Schaltring 45 nicht verschlossen, sondern nur der Strömungsweg durch den Voröffnungsquerschnitt 61 im Ringsteg 39 durch die Vorschaltung des Voröffnungsquerschnitt 65 im Schaltring reduziert. Bei einer Einfahrbewegung der Kolbenstange hebt der Schaltring von der Anschlagfläche 43 aufgrund der Reibkraft zwischen dem Schaltring und der Innenwandung des Zylinders 3 ab, so dass unmittelbar der Voröffnungsquerschnitt des 61 des Drosselrings wirksam ist.

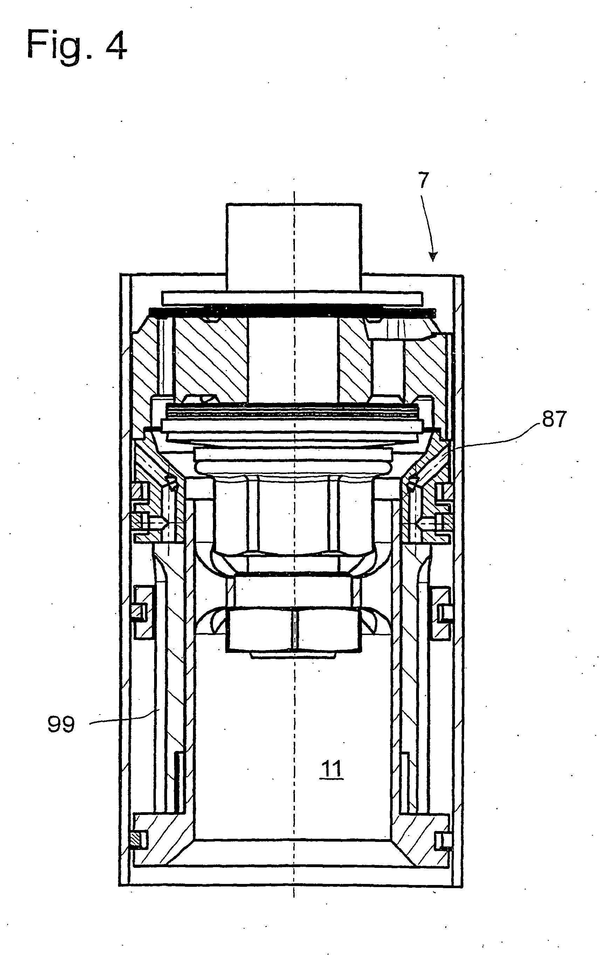

Die Lösung zur Ausgestaltung einer Kolbenanordnung nach den Figuren 4 bis 7 stellt eine Weiterentwicklung der Variante nach Fig. 3 dar. Ein wesentlicher Unterschied besteht jedoch darin, dass im Verteilerring 81 mindestens ein Anschluss 83 für eine Strömungsrichtung bei einer Kolbenstangenausfahrbewegung und mindestens ein Anschluss 87 für eine Strömungsrichtung des Dämpfmediums bei einer Kolbenstangeneinfahrbewegung. Der Anschluss 87 endet an einer Stirnfläche der Distanzhülse 79. Innerhalb des Verteilerrings ist eine Rückschlagventilanordnung ausgeführt, die den Bypasskanal und die Strömungsverbindung bei den verschiedenen Strömungsrichtungen in Abhängigkeit der Kolbenstangenbewegung trennt. Die Rückschlagventilanordnung besteht aus zwei Rückschlagventilen, die jeweils als bewegliche Rückschlagventilringe 85; 89 in Ringnuten 91; 93 ausgeführt sind. Die Rückschlagventile weisen ein gegensinniges Schließverhalten auf, d. h. bei geöffnetem Anschluss 83 ist der Anschluss 87 blockiert und umgekehrt. Die Rückschlagventile sind durch den Kontakt mit dem Zylinder 3 reibkraftgesteuert.

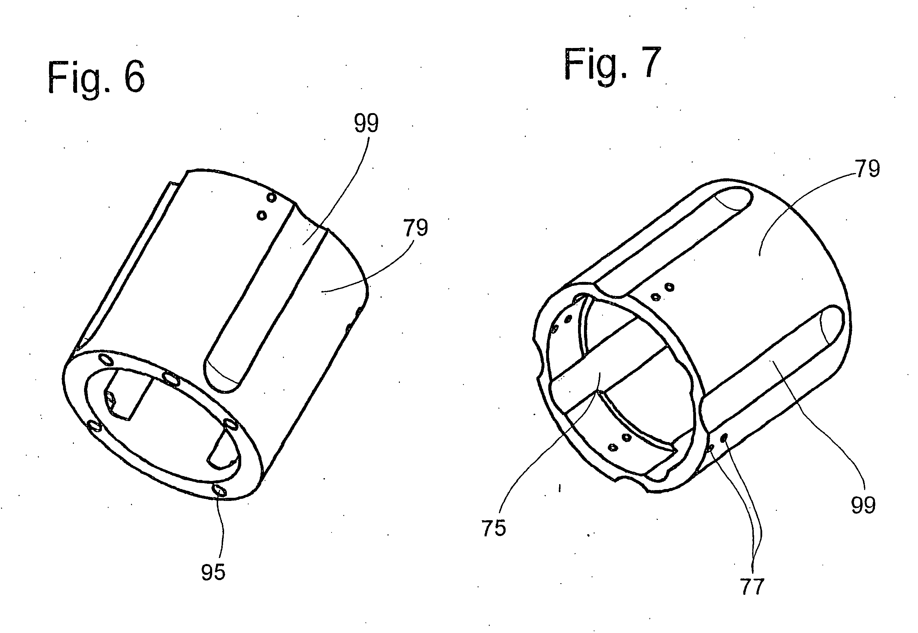

Der Bypasskanal 75 in der Kolbenanordnung 7 wird von axial verlaufenden Nuten innerhalb der Distanzhülse 79 gebildet. (Fig. 6 und 7) Endseitig in Richtung des Verteilerrings 81 münden die axial verlaufenden Nuten in Axialbohrungen 95, die orientiert zu einem oder mehreren Axialkanälen 97 als Teil der Anschlüsse 83 montiert sind. Die Axialkanäle 97 und die Anschlüsse 87 sind ggf. abwechselnd auf einem Teilkreisdurchmesser angeordnet, es besteht jedoch keine hydraulische Verbindung zwischen den Anschlüssen 87 und den Axialkanäle 97. Auf ihrer Außenseite ist die Distanzhülse 79 mit einem Längsprofil in Form von Längsnuten 99 zur Hinterströmung des Schaltrings 45 ausgeführt.

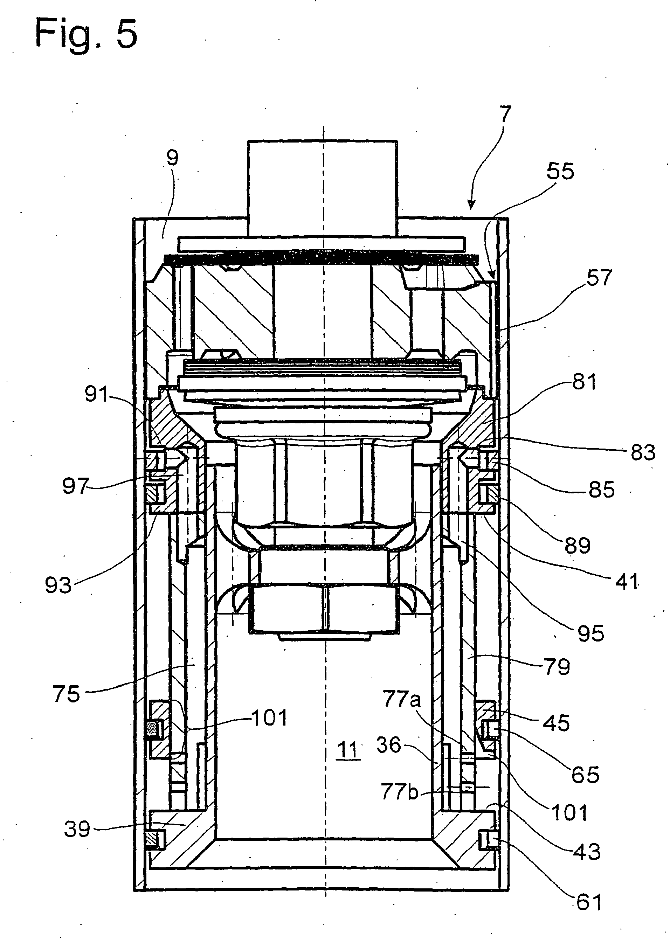

Die Figur 5 zeigt eine Momentanbetriebsstellung der Kolbenanordnung 7 bei einer Kolbenstangenausfahrbewegung. Der Schaltring 45 befindet sich an einer beliebiger Position zwischen den beiden Anschlagflächen 41; 43. Der Rückschlagventilring 85 gibt den Anschluss 83 und damit die Axialkanäle 97 zum Bypasskanal 75 frei, hingegen blockiert der Rückschaltventilring 89 die direkte Strömung zum Schaltring 45. Das Dämpfmedium strömt durch den Verteilerring 81 entlang der Bypasskanäle in der Distanzhülse und mündete durch eine oder mehrere Verbindungsöffnungen 77a; 77b, die der Anschlagfläche 43 vorgelagert sind. Im weiteren Strömungsweg passiert das Dämpfmedium den Voröffnungsquerschnitt 61 im Ringsteg 39. Ab einer bestimmten Hublänge in Ausfahrrichtung erreicht der Schaltring die Verbindungsöffnung 77a und blockiert diese bei weiterer Kolbenstangenbewegung in die selbe Richtung. Der Ringraum zwischen der Anschlagfläche 41 und der Oberseite des Schaltrings 45 wird über die Längsnuten 99 mit Dämpfmedium aus dem Bypasskanal 75 versorgt. Wird diese Versorgung über das gezielte stufenweise Sperren oder Drosseln der Verbindungsöffnungen 77a vorgenommen, dann sinkt die Druckbeaufschlagung des Schaltrings auf seiner Oberseite. An der Unterseite des Schaltrings zur Anschlagfläche 43 besteht ein leichter Überdruck zur Oberseite, der ein Anschlaggeräusch des Schaltrings verhindert.

Damit bei Anliegen des Schaltrings 45 an der Anschlagfläche 43 der Voröffnungsquerschnitt 65 im Schaltring die Dämpfkraftkennlinie der Kolbenanordnung bestimmt, sind verschiedene Varianten möglich. Zum einen können die Rückschlagventilringe eine definierte Leckage aufweisen, die am Schaltring parallel zum Bypasskanal 75 fließt. Eine Alternative besteht darin, dass der axiale Abstand der Verbindungsöffnung 77a; 77b zur Anschlagfläche 43 größer ist als die Höhe der Innenmantelfläche 101 des Schaltring, so dass bei Anlage des Schaltrings an der Anschlagfläche 43 Dämpfmedium aus dem Bypasskanal 75 über die Verbindungsöffnung 77a und ggf. 77b an der Oberseite des Schaltrings ansteht und durch den Voröffnungsquerschnitt 65 und dem Voröffnungsquerschnitt 61 in den Arbeitsraum 11 fließen kann.

Des weiteren besteht die Möglichkeit den Schaltring so zu gestalten, dass die Asutritte 77a; 77b nicht verschlossen werden, indem stirnseitig mindestens eine in Richtung der Anschlagfläche 43 weisende Kerbe 101 im Schaltring ausgeführt ist.

Bei einer Kolbenstangenbewegung in Richtung des Arbeitsraum 11 gemäß der Fig. 4 kann das Dämpfmedium durch den Voröffnungsquerschnitt 65 in Richtung des Schaltrings 45 fließen. Die Verbindungsöffnungen 77a; 77b sind offen, so dass das Dämpfmedium über die Bypasskanäle 75 auch in den Axialkanälen der Anschlüsse 83 ansteht. Diese werden jedoch von dem Rückschaltventilring 83 versperrt. Das Dämpfmedium kann durch die Längsnuten 99 den Voröffnungsquerschnitt 65 im Schaltring 45 umgehen. Der Rückschaltventilring 89 hat den Anschluss 87 freigegeben, so dass das Dämpfmedium in den Arbeitsraum 9 fließen kann. Die Längsnuten laufen kurz vor der Anschlagfläche 41 aus, so dass zwischen dem Schaltring und der Distanzhülse eine Drosselwirkung einsetzt, die ein Anschlaggeräusch des Schaltrings 45 an der Anschlagfläche 41 verhindert. Liegt der Schaltring an der Anschlagfläche 41 an, wird der Dämpfmediumstrom durch die Voröffnungen 61; 65, wobei die Voröffnung 65 kleiner ist, gedrosselt.

Es wurde bereits darauf hingewiesen, dass die Distanzhülse 79 mit ihren Axialbohrungen 95 zur den Axialkanälen 97 im Verteilerring orientiert zueinander montiert sind. Durch die Klemmverbindung der Distanzhülse 79 zwischen dem Ringsteg 39 und dem Klemmring 81 kann jedoch der wirksame Durchtrittsquerschnitt der Anschlüsse 83 bzw. der Axialkanäle 97 eingestellt werden, indem man die Distanzhülse zum Verteilerring verdreht.

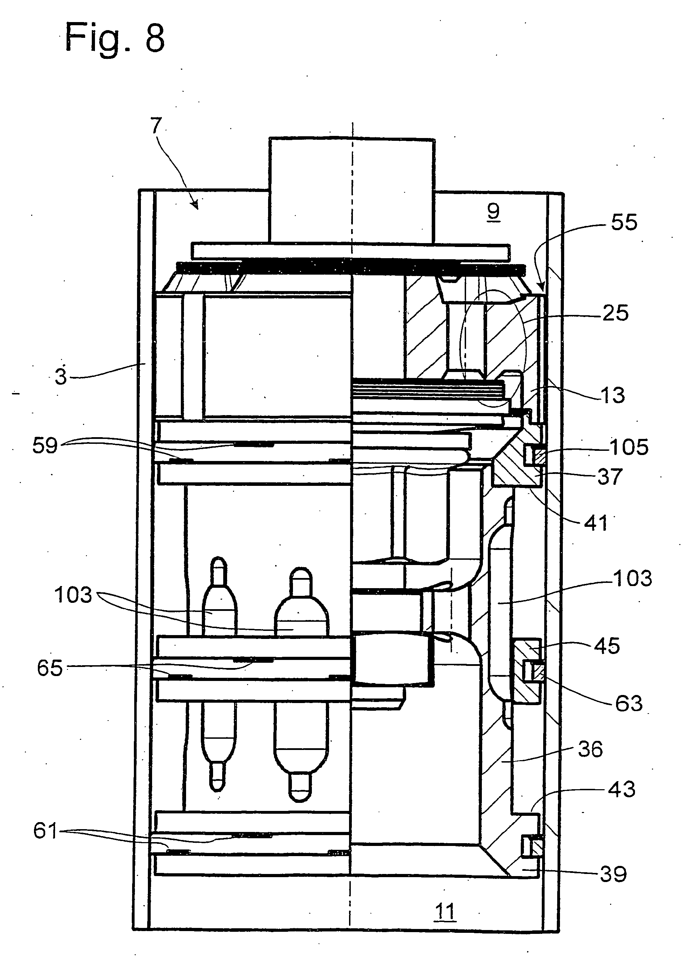

Die Fig. 8 zeigt eine Ausführungsform einer Kolbenanordnung 7, die funktional an die Variante nach Fig. 2 angelehnt ist. Die Ausgestaltung des Druckstufen- und des Zugstufenventils 23; 25 entspricht der Fig. 2. Abweichend ist in dem hülsenförmigen Grundkörper mindestens eine axial verlaufende Nut 103 ausgeführt, die den Schaltring 45 zusammen mit dem Drosselring 63 radial innen hinterströmen lässt. Die mindestens eine Nut erstreckt so nah in Richtung der Anschlagfläche 41; 43, so dass bei einer Umkehrbewegung der Kolbenstange und einer damit verbundene Abhubsituation des Schaltrings von einer Anschlagfläche eine durch die Voröffnungsquerschnitte 59; 61 bestimmte Dämpfkraft vorliegt. Dabei strömt das Dämpfmedium durch die Strömungsverbindung 55 durch den Voröffnungsquerschnitt 59, der von Kerben auf der Ober-und Unterseite eines Kolbenrings 105 gebildet wird, in den Ringraum zwischen den beiden Ringstegen 37; 39. In der linken Zeichnungshälfte ist dargestellt, dass mehrere Nuten 103 axial versetzt und ggf. in unterschiedlicher Breite ausgeführt, das Dämpfmedium am Schaltring vorbei in Richtung des Voröffnungsquerschnitts 61 fließen lassen. Die mindestens eine Nut 103 weist kurz vor der Anschlagfläche nur eine geringe Breite und/oder Tiefe auf, so dass die Strömung stark gedrosselt wird, wenn der Schaltring das Ende der Nut 103 erreicht. Diese Drosselwirkung verhindert ein geräuschverbundenes Anschlagen des Schaltrings.

## Patentansprüche

1. Schwingungsdämpfer mit amplitudenselektiver Dämpfkraft, umfassend eine Kolbenstange, die in einem dämpfmittelgefüllten Zylinder axial beweglich geführt ist, wobei die Kolbenstange eine Kolbenanordnung trägt, die den Zylinder in einen kolbenstangenseitigen und einen kolbenstangenfernen Arbeitsraum unterteilt, wobei zwischen den Arbeitsräumen eine Strömungsverbindung vorliegt, die von einem axial beweglichen Schaltring in Abhängigkeit von der Kolbenstangenbewegung gesteuert wird, wobei der Schaltweg des Schaltrings von zwei Anschlagflächen begrenzt wird,
**dadurch gekennzeichnet,**
**dass** hydraulisch parallel zur Strömungsverbindung (55) ein Bypasskanal (75) vorliegt, der mindestens eine Verbindungsöffnung (77; 77a; 77b) zur Strömungsverbindung (55) aufweist, wobei die Verbindungsöffnung (77; 77a; 77b) einer der Anschlagflächen (43) vorgelagert ist.

2. Schwingungsdämpfer nach Anspruch 1,
**dadurch gekennzeichnet,**
**dass** der Bypasskanal (75) von einem hülsenförmigen Grundkörper (36) und einer dazu konzentrisch angeordneten Distanzhülse (79) gebildet wird.

3. Schwingungsdämpfer nach Anspruch 2,
**dadurch gekennzeichnet,**
**dass** die Distanzhülse (79) auf ihrer Außenseite mit einem Längsprofil (99) zur Hinterströmung des Schaltrings (45) ausgeführt ist.

4. Schwingungsdämpfer nach Anspruch 1,
**dadurch gekennzeichnet,**
**dass** die Kolbenanordnung 87) einen Verteilerring (81) mit einen Anschluss (83) an die Strömungsverbindung (55) und den Bypasskanal (75) aufweist.

5. Schwingungsdämpfer nach Anspruch 4,
**dadurch gekennzeichnet,**
**dass** der Verteilerring (81) mindestens einen Anschluss (83) für eine Strömungsrichtung des Dämpfmediums bei einer Kolbenstangenausfahrbewegung und mindestens einen Anschluss (87) für eine Strömungsrichtung bei einer Kolbenstangeneinfahrbewegung aufweist.

6. Schwingungsdämpfer nach Anspruch 4,
**dadurch gekennzeichnet,**
**dass** die Distanzhülse (79) in Umfangsrichtung orientiert zum Verteilerring (81) montiert ist.

7. Schwingungsdämpfer nach Anspruch 5,
**dadurch gekennzeichnet,**
**dass** die Anschlüsse (83; 87) im Verteilerring (81) in ihrem wirksamen Querschnitt einstellbar sind.

8. Schwingungsdämpfer nach Anspruch 5,
**dadurch gekennzeichnet,**
**dass** die Distanzhülse (79) zum Verteilerring (81) verdrehbar ausgeführt ist.

9. Schwingungsdämpfer nach Anspruch 5,
**dadurch gekennzeichnet,**
**dass** eine Rückschlagventilanordnung (85; 89) den Bypasskanal (75) und die Strömungsverbindung (55) bei den verschiedenen Strömungsrichtungen in Abhängigkeit der Kolbenstangenbewegungen trennt.

10. Schwingungsdämpfer nach Anspruch 15,
**dadurch gekennzeichnet,**
**dass** die Rückschlagventilanordnung aus zwei Rückschlagventilen (85; 89) besteht, die ein gegensinnig Schließverhalten aufweisen.

11. Schwingungsdämpfer nach Anspruch 10,
**dadurch gekennzeichnet,**
**dass** die Rückschlagventilanordnung von mindestens einem Rückschlagventilring (85; 89) gebildet wird.

12. Schwingungsdämpfer nach Anspruch 10,
**dadurch gekennzeichnet,**
**dass** die Rückschlagventilanordnung (85; 89) innerhalb des Verteilerrings (81) ausgeführt ist.

## Claims

1. Vibration damper having an amplitude-selective damping force, comprising a piston rod which is guided axially movably in a cylinder which is filled with damping medium, the piston rod carrying a piston arrangement which divides the cylinder into a working chamber on the piston-rod side and a working chamber which is remote from the piston rod, there being a flow connection between the working chambers, which flow connection is controlled by an axially movable switching ring as a function of the piston-rod movement, the switching travel of the switching ring being delimited by two stop faces, **characterized in that** there is a bypass channel (75) hydraulically parallel to the flow connection (55), which bypass channel (75) has at least one connecting opening (77; 77a; 77b) to the flow connection (55), the connecting opening (77; 77a; 77b) being positioned in front of one of the stop faces (43).

2. Vibration damper according to Claim 1, **characterized in that** the bypass channel (75) is formed by a sleeve-shaped basic body (36) and a spacer sleeve (79) which is arranged concentrically with respect to the former.

3. Vibration damper according to Claim 2, **characterized in that** the spacer sleeve (79) is configured on its outer side with a longitudinal profile (99) for rear flow behind the switching ring (45).

4. Vibration damper according to Claim 1, **characterized in that** the piston arrangement (87) has a distributor ring (81) with a connection (83) to the flow connection (55) and the bypass channel (75).

5. Vibration damper according to Claim 4, **characterized in that** the distributor ring (81) has at least one connection (83) for a flow direction of the damping medium in the case of a piston-rod extension movement and at least one connection (87) for a flow direction in the case of a piston-rod retraction movement.

6. Vibration damper according to Claim 4, **characterized in that** the spacer sleeve (79) is mounted such that it is oriented in the circumferential direction with respect to the distributor ring (81).

7. Vibration damper according to Claim 5, **characterized in that** the connections (83; 87) in the distributor ring (81) can have their effective cross section set.

8. Vibration damper according to Claim 5, **characterized in that** the spacer sleeve (79) is configured such that it can twist with respect to the distributor ring (81).

9. Vibration damper according to Claim 5, **characterized in that** a non-return valve arrangement (85; 89) separates the bypass channel (75) and the flow connection (55) in the case of the different flow directions, as a function of the piston-rod movements.

10. Vibration damper according to Claim 15, **characterized in that** the non-return valve arrangement comprises two non-return valves (85; 89) which have a closing behaviour in opposite directions.

11. Vibration damper according to Claim 10, **characterized in that** the non-return valve arrangement is formed by at least one non-return valve ring (85; 89).

12. Vibration damper according to Claim 10, **characterized in that** the non-return valve arrangement (85; 89) is configured within the distributor ring (81).

## Revendications

1. Amortisseur de vibrations avec une force d'amortissement dépendant de l'amplitude, comprenant une tige de piston, qui est guidée de manière axialement déplaçable dans un cylindre rempli de fluide amortisseur, la tige de piston portant un agencement de piston qui divise le cylindre en un espace de travail côté tige de piston et un espace de travail éloigné de la tige de piston, une connexion fluidique étant établie entre les espaces de travail, laquelle est commandée par un anneau de commutation déplaçable axialement en fonction du déplacement de la tige de piston, la course de commutation de l'anneau de commutation étant limitée par deux surfaces de butée,
**caractérisé en ce qu'**
un canal de dérivation (75) hydraulique parallèle à la connexion fluidique (55) est prévu, lequel présente au moins une ouverture de connexion (77 ; 77a ; 77b) pour la connexion fluidique (55), l'ouverture de connexion (77 ; 77a ; 77b) étant montée avant l'une des surfaces de butée (43).

2. Amortisseur de vibrations selon la revendication 1,
**caractérisé en ce que**
le canal de dérivation (75) est formé par un corps de base (36) en forme de douille et une douille d'espacement (79) disposée concentriquement à celui-ci.

3. Amortisseur de vibrations selon la revendication 2,
**caractérisé en ce que**
la douille d'espacement (79) est réalisée sur son côté extérieur avec un profil longitudinal (99) pour l'écoulement par l'arrière de l'anneau de commutation (45).

4. Amortisseur de vibrations selon la revendication 1,
**caractérisé en ce que**
l'agencement de piston (7) présente un anneau de distribution (81) avec un raccord (83) à la connexion fluidique (55) et au canal de dérivation (75).

5. Amortisseur de vibrations selon la revendication 4,
**caractérisé en ce que** l'anneau de distribution (81) présente au moins un raccord (83) pour une direction d'écoulement du fluide amortisseur lors du mouvement de sortie de la tige de piston, et au moins un raccord (87) pour une direction d'écoulement lors du mouvement de rentrée de la tige de piston.

6. Amortisseur de vibrations selon la revendication 4,
**caractérisé en ce que**
la douille d'espacement (79) est montée de manière orientée dans la direction périphérique par rapport à l'anneau de distribution (81).

7. Amortisseur de vibrations selon la revendication 5,
**caractérisé en ce que**
la section transversale efficace des raccords (83 ; 87) dans l'anneau de distribution (81) peut être ajustée.

8. Amortisseur de vibrations selon la revendication 5,
**caractérisé en ce que**
la douille d'espacement (79) est réalisée de manière rotative par rapport à l'anneau de distribution (81).

9. Amortisseur de vibrations selon la revendication 5,
**caractérisé en ce qu'**
un agencement de clapet anti-retour (85 ; 89) sépare le canal de dérivation (75) et la connexion fluidique (55) dans les différentes directions d'écoulement en fonction des mouvements de la tige de piston.

10. Amortisseur de vibrations selon la revendication 15,
**caractérisé en ce que**
l'agencement de clapet anti-retour se compose de deux clapets anti-retour (85 ; 89) qui présentent un comportement de fermeture de sens opposé.

11. Amortisseur de vibrations selon la revendication 10,
**caractérisé en ce que**
l'agencement de clapet anti-retour est formé par au moins un anneau de clapet anti-retour (85 ; 89).

12. Amortisseur de vibrations selon la revendication 10,
**caractérisé en ce que**
l'agencement de clapet anti-retour (85 ; 89) est réalisé à l'intérieur de l'anneau de distribution (81).
